# EUROPÄISCHE PATENTSCHRIFT

(11) **EP 0 875 440 B1**
(45) Veröffentlichungstag und Bekanntmachung des Hinweises auf die Patenterteilung: **08.01.2003**
(21) Anmeldenummer: 98107405.7
(22) Anmeldetag: 23.04.1998
(51) Int. Cl.: B62D 11/04

(54) **Fahrzeug in selbstangetriebener Bauweise**
Self-driving vehicle
Véhicule à mobilité autonome

(30) Priorität: 28.04.1997 US 848042
(43) Veröffentlichungstag der Anmeldung: 04.11.1998
(73) Patentinhaber: DEERE & COMPANY, Moline, Illinois 61265-8098 (US)
(72) Erfinder: Braun, Stephen Alphonse, Horicon, WI 53032 (US); Williams, Llewellyn Everett, Hastings, MN 55033 (US)
(74) Vertreter: Magin, Ludwig Bernhard

(56) Entgegenhaltungen:
- US-A- 5 146 735
- US-A- 5 518 079
- PATENT ABSTRACTS OF JAPAN vol. 009, no. 330 (M-442), 25. Dezember 1985 (1985-12-25) -& JP 60 161268 A (KUBOTA TEKKO KK), 22. August 1985 (1985-08-22)

## Beschreibung

Die Erfindung betrifft ein Fahrzeug in selbstangetriebener Bauweise, insbesondere Rasenmäher, mit einem Motor, wenigstens einem Getriebe, einem Steuerhebel und Bremsen, wobei das Getriebe wenigstens eines von zwei Fortbewegungsmitteln antreibt und in eine Neutralstellung bringbar ist, der Steuerhebel eine Stellung für Vorwärtsfahrt und eine Halt-Stellung einnehmen kann und die Bremsen auf die Fortbewegungsmittel wirken.

Die US-A-5,146,735 offenbart einen gattungsgemässen Rasenmäher mit einem Motor, einem mechanischen Hauptgetriebe und für jeweils ein Rad einer Seite ein Zugmittelgetriebe zwischen dem Hauptgetriebe und dem Rad, um den Rasenmäher fortzubewegen. Jedes Zugmittelgetriebe enthält einen Antriebsriemen, der mittels einer Spannrolle geoder entspannt werden kann. Gleichzeitig mit dem Entspannen des Riemens, was zu einer Antriebsunterbrechung führt, wird mit einer gewissen Verzögerung eine Bremse an dem freigegebenen Rad betätigt, so daß dieses Rad angehalten wird. Da das Rad auf der anderen Seite weiterhin angetrieben wird, kann der Rasenmäher auf diese Weise gelenkt werden. Das Hauptgetriebe kann zudem in eine Neutralstellung und in Rückwärtsfahrt geschaltet werden, wozu es jeweils von dem Motor getrennt wird. Zur Bedienung des Hauptgetriebes, der Zugmittelgetriebe, jeweils einer Bremse und beider Bremsen gemeinsam sind mehrere Schalthebel vorgesehen. Mittels eines Hauptschalthebels wird das Hauptgetriebe vorwärts, neutral oder rückwärts geschaltet. Mittels eines Lenkhebels pro Seite des Rasenmähers wird die Spannrolle angelegt oder entfernt und dazu die Bremse geöffnet oder angelegt. Ein weiterer Hebel ist für die Rückwärtsfahrt vorgesehen, damit eine andere Spannrolle angelegt und die Bremsen geöffnet werden können, und schließlich ist ein Parkbremshebel vorhanden, mit dem beide Lenkhebel in eine Stellung gebracht werden können, in der beide Bremsen geschlossen sind.

Das der Erfindung zugrunde liegende Problem wird darin gesehen, daß diese Vielzahl von Hebeln umständlich zu bedienen ist, fertigungstechnische Nachteile hat und beim Schalten des Hauptgetriebes der Antriebsstrang unterbrochen wird.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird mittels eines einzigen Schalthebels sowohl die Fahrtgeschwindigkeit bestimmt und zwischen Vorwärtsfahrt und Neutral gewählt, als auch beide Bremsen betätigt, um das Fahrzeug stillzusetzen, während der Antrieb unterbrochen wird. Hieraus ergibt sich eine große Teilereduzierung und Vereinfachung der Bedienung.

Dadurch, daß mittels eines Anschlags der Steuerhebel in verschiedenen Stellungen, die verschiedenen Geschwindigkeiten entsprechen, angehalten werden kann, ist es einer Bedienungsperson einfach möglich, nach einer Unterbrechung oder einem anderen Betriebszustand auf schnelle Weise den Rasenmäher wieder mit der ursprünglichen Geschwindigkeit zu betreiben.

An dem Fahrzeug kann mittels wenigstens eines Schalthebels und eines Schalters, die von einer Bedienungsperson betätigt und zu dem Motor in Verbindung gebracht werden, ein Sicherheitssystem geschaffen werden, das verhindert, daß das Fahrzeug weiterhin angetrieben wird, wenn sich die Bedienungsperson von dem Fahrzeug entfernt und z. B. Wartungsarbeiten durchführen möchte.

Ungeachtet der Möglichkeit, das Fahrzeug mit Gleisketten oder dergleichen auszurüsten, mit denen es fortbewegt werden kann, haben Räder den Vorteil, daß sie kostengünstig sind und eine geringe Bodenbeeinträchtigung hinterlassen.

Die Verwendung hydraulischer Komponenten, nämlich eines Hydraulikmotors und einer Hydraulikpumpe zum Antreiben der Fortbewegungsmittel hat gegenüber der bekannten Lösung den Vorteil, daß statt eines mechanischen Getriebes und zweier Zugmittelgetriebe, der Kupplung zwischen Motor und Hauptgetriebe und mehrerer Schalthebel nur noch eine Pumpe und ein Motor erforderlich sind, die zudem leicht zu steuern sind; aber auch die Verwendung einer Pumpe und zweier Motoren oder zweier Pumpen und zweier Motoren ist fertigungs- und steuerungstechnisch einfach zu handhaben.

Wenn beide Motoren mittels des Steuerhebels bedienbar sind, bedarf es keiner weiteren Schaltmittel, um die Geschwindigkeit des Fahrzeugs zu steuern, und die Verbindung zwischen der Unterbrechung des Antriebs und der Betätigung der Bremsen liegt unmittelbar vor.

Die Verwendung von dem Steuerhebel unabhängiger Geschwindigkeitssteuerungen macht es möglich, mittels der Motoren zu lenken und Fahrzustände, z. B. Rückwärtsfahrt, einzuleiten, die mit dem Steuerhebel nicht erreichbar sind. Es ist außerdem möglich, Geschwindigkeiten anzusteuern, die hinter den von dem Steuerhebel maximal vorgegebenen Geschwindigkeiten zurückbleiben.

Eine einfache Betätigung der Bremsen wird durch die Verwendung eines Seils oder Bowdenzugs erreicht, das auf vielfältige Weise von dem Steuerhebel zu einem Bremseinrückzusammenbau geführt werden kann, wobei letzter Bremsscheiben oder Bremsklötze an eine Bremsscheibe oder Bremstrommel anlegt.

Nasse Bremsen haben gegenüber trockenen eine höhere Bremsleistung und einen minimalen Verschleiß.

Die Verwendung von Reibmitteln zwischen dem Steuerhebel und einem ihn haltenden Träger verhindert, daß der Steuerhebel unbeabsichtigt, z. B. aufgrund von Erschütterungen, seine Lage ändert.

In der Zeichnung ist ein nachfolgend näher beschriebenes Ausführungsbeispiel der Erfindung dargestellt. Es zeigt:
- Fig. 1: einen erfindungsgemäßen selbstangetriebenen, geführten Rasenmäher in perspektivischer Darstellung,
- Fig. 2: einen Steuermechanismus für einen Radmotor in perspektivischer Darstellung,
- Fig. 3: eine Anordnung von Einstellmitteln aus Figur 2 in vergrößerter Darstellung,
- Fig. 4: die linke Seite des Steuermechanismus in vergrößerter Darstellung, wobei sich ein Hauptgeschwindigkeitshebel in seiner Höchstgeschwindigkeitsstellung befindet,
- Fig. 5: die linke Seite des Steuermechanismus aus Figur 4 in vergrößerter Darstellung, wobei sich der Hauptgeschwindigkeitshebel in seiner Halt-Stellung befindet,
- Fig. 6: die rechte Seite des Steuermechanismus in perspektivischer Darstellung,
- Fig. 7: einen Teil der linken Seite des Steuermechanismus in vergrößerter und perspektivischer Darstellung,
- Fig. 8: den Teil des Steuermechanismus aus Figur 7, wobei allerdings die Teile in einer Anordnung gezeigt sind, wie sie vorliegt, wenn sich der Hauptgeschwindigkeitshebel in seiner Halt-Stellung befindet, und
- Fig. 9: ein schematisches Diagramm des Antriebssystems des Rasenmähers nach einem bevorzugten Ausführungsbeispiel.

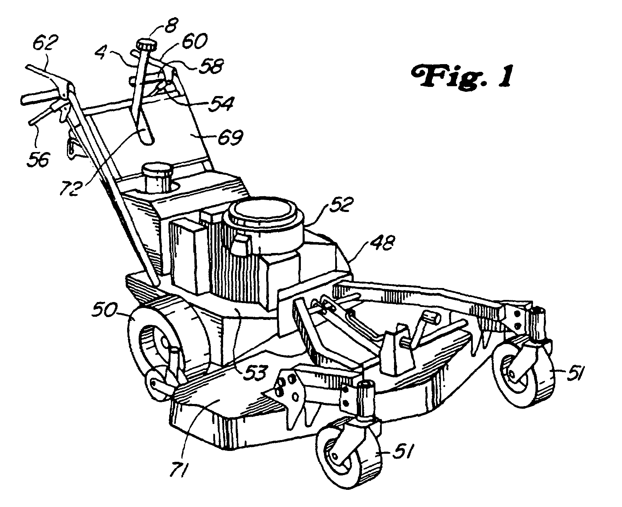

In Figur 1 ist in vereinfachter perspektivischer Darstellung ein selbstangetriebener geführter Rasenmäher nach einem bevorzugten Ausführungsbeispiel der Erfindung gezeigt. Der Rasenmäher enthält im allgemeinen ein linkes und ein rechtes Fortbewegungsmittel 48 und 50, ein Paar vorderer Räder 51, einen als Verbrennungsmotor ausgebildeten Motor 52, der auf eine Antriebstragfläche 53 aufmontiert ist, die selbst ein Paar hydrostatischer Getriebe aufnimmt, eine zweite Tragfläche 71, die ein oder mehrere Messer beinhaltet, und ein Instrumentenbrett 69, das sich zwischen nach hinten weisenden Handgriffen 58 erstreckt.

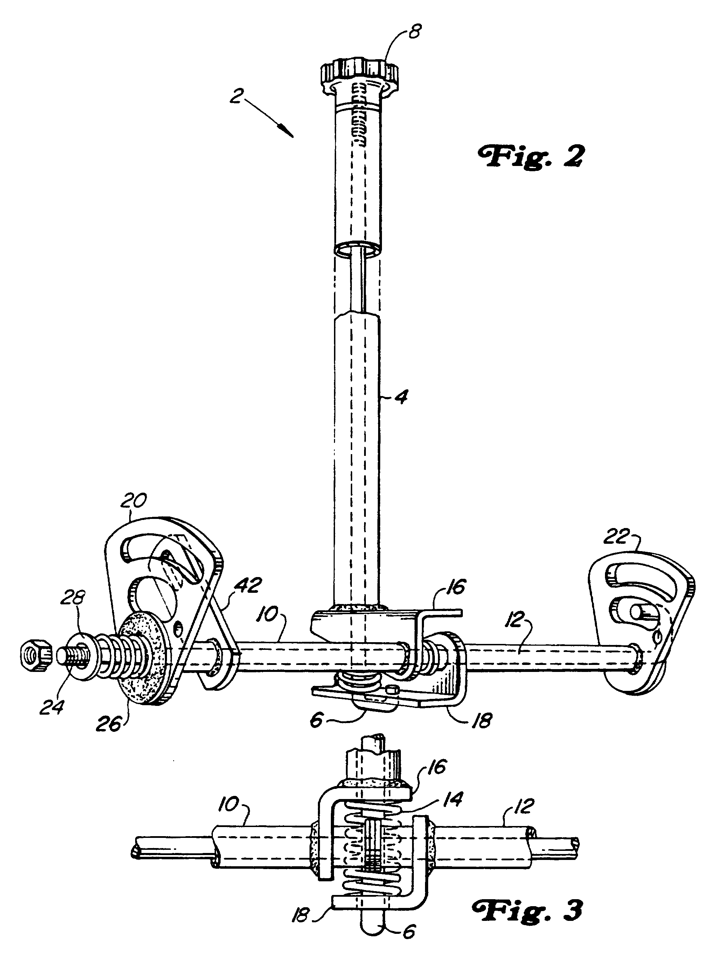

Gemäß Figur 2 besteht ein Steuermechanismus 2 für Motoren (M) für die Fortbewegungsmittel aus einem hauptsächlichen Steuerhebel 4, der als ein hohler Zylinder ausgebildet ist, in den ein mit Gewinde versehenes J-förmiges formschlüssiges Stellmittel 6 in der Form einer Stange eingefügt ist, damit dieses mit seinem Gewindeende in Eingriff mit einem Einstellrad 8 zum Einstellen der Spur gelangen kann. Der hauptsächliche Steuerhebel 4 ist an ein linkes Steuerrohr 10 angeschweißt und über die sich rückwärtig erstreckende Basis des Stellmittels 6 und ein kraftschlüssiges Stellmittel 14 in der Art einer Feder zur Spannung des Steuerrohrs 14 mit einem rechten Steuerrohr 12 funktional verbunden. Das linke und das rechte Steuerrohr 10, 12 haben linke und rechte plattenförmige Einstellmittel 16, 18 für die Steuerrohre 10, 12, die an deren innere Enden angebracht sind, und enden an linken und rechten Führungen 20, 22 an ihren äußeren Enden. Eine Schwenkstange 24 erstreckt sich durch das linke und das rechte Steuerrohr 10, 12 entlang einer Schwenkachse des linken und rechten Steuerrohrs 10, 12. Eine unbeabsichtigte Drehbewegung des linken und des rechten Steuerrohrs 10, 12 wird unterdrückt durch Reibmittel 26, von denen eines zwischen einen Träger 68 des Instrumentenbretts 69 und die linke Führung 20 eingefügt ist, und von denen ein anderes zwischen den Träger 68 und die rechte Führung 22 eingefügt ist. Eine Feder 28 der Schwenkstange 24 hilft, die Reibmittel 26 anzupressen.

Das linke und rechte Einstellmittel 16, 18 hat im allgemeinen eine flache Oberfläche, die von dem Stellmittel 14 voneinander weggedrückt werden. Das Anspannen oder Lösen des Einstellrades 8 bewirkt eine Drehung des rechten Steuerrohrs 12 in bezug auf das linke Steuerrohr 10 und vergrößert oder verringert die Geschwindigkeit des rechten angetriebenen Fortbewegungsmittels 50 in bezug auf das linke angetriebene Fortbewegungsmittel 48 Obwohl das besondere dargestellte Ausführungsbeispiel linke und rechte angetriebene Räder enthält, ist hier festzuhalten, daß die Erfindung nicht nur die Verwendung angetriebener Räder, sondern auch andere den Boden beaufschlagende Fortbewegungsmittel umfaßt, wie z. B. Gleisketten.

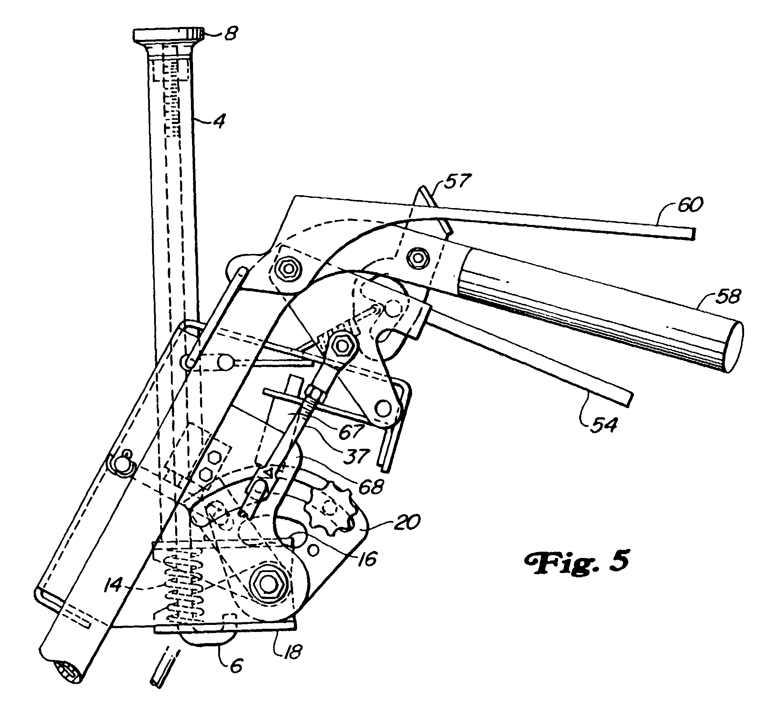

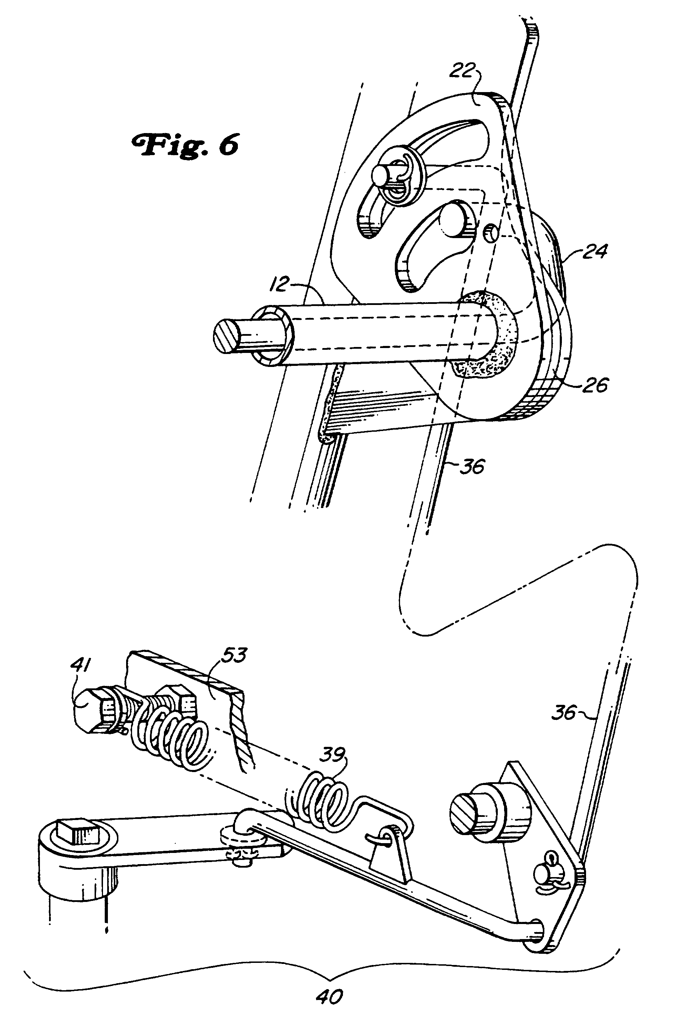

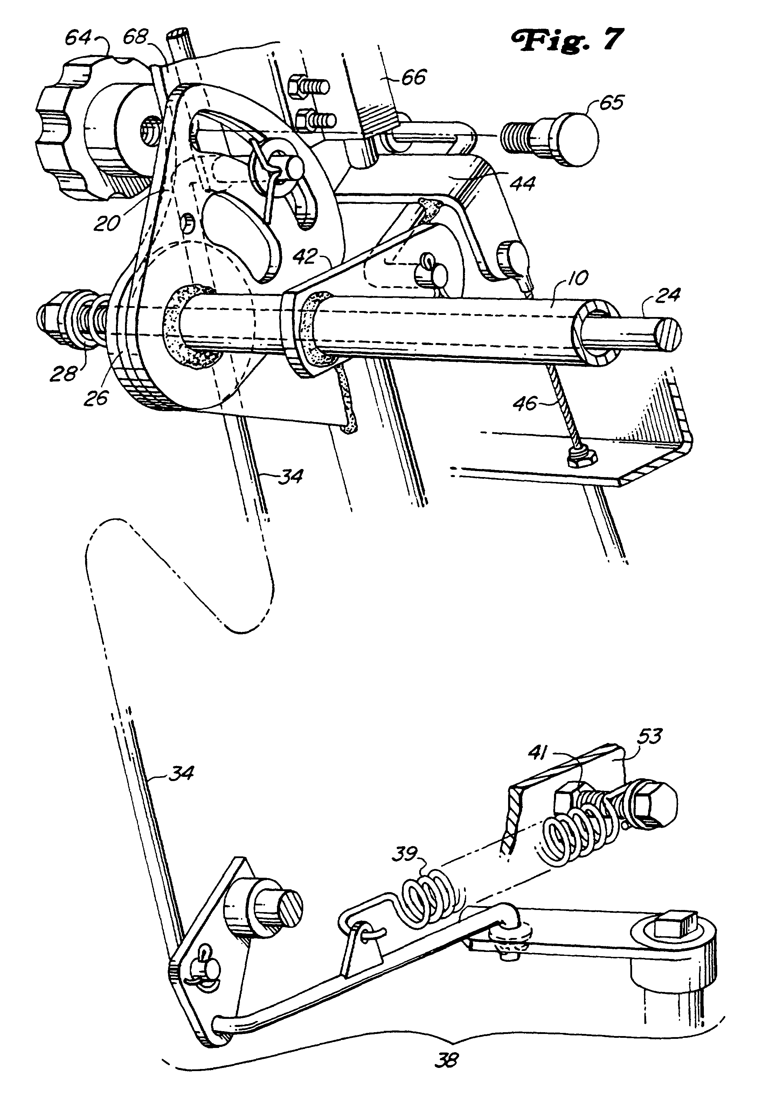

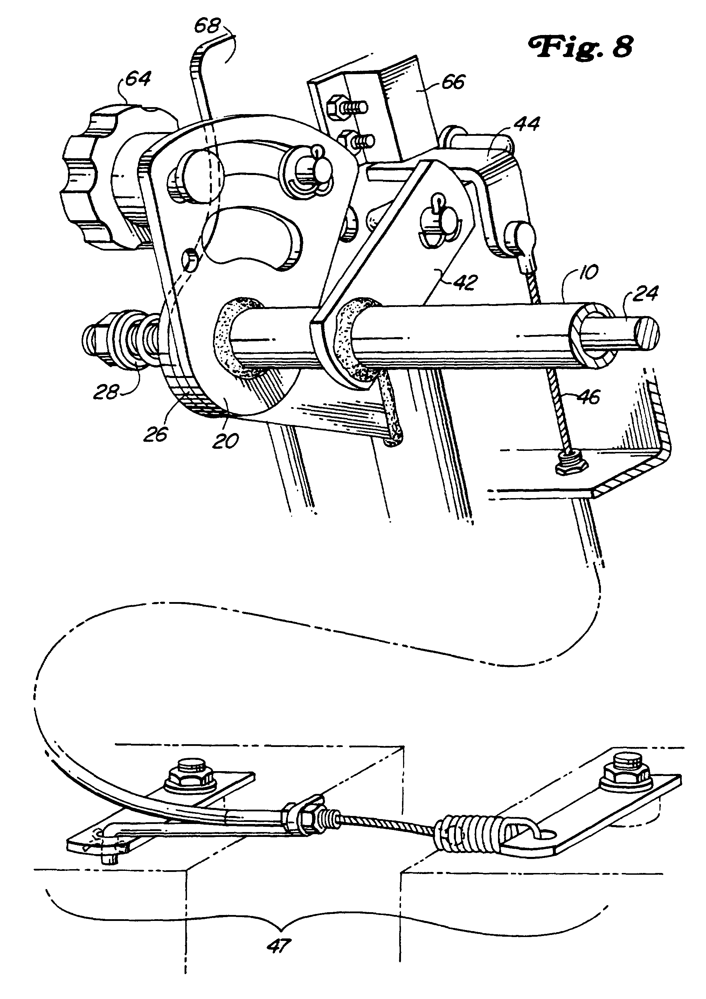

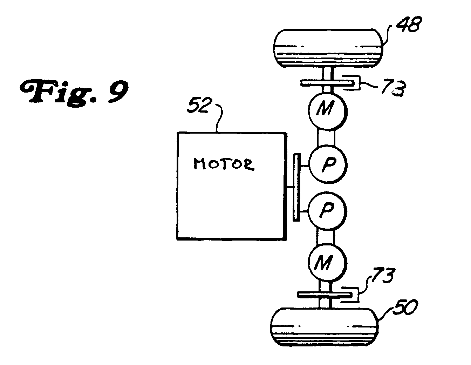

Wenn der hauptsächliche Steuerhebel 4 von der Bedienungsperson gehandhabt wird, verändert das linke und das rechte Steuerrohr 10, 12 den Bewegungsbereich dazugehöriger linker und rechter Gestänge 34, 36, die der Steuerung, bzw. Lenkung dienen. Das linke und rechte Gestänge 34, 36 wird dazu benutzt, linke und rechte Schwenkplatteneinstellvorrichtungen 38, 40 - sh. Fig. 6 und 7) zu beeinflussen, um die Verdrängung dazugehöriger als Hydraulikpumpen ausgebildeter Pumpen (P) innerhalb des Getriebes zu ändern. Die Verdrängung der Pumpen (P) steht in direktem Bezug zu der Ausgabe der dazugehörigen als Hydraulikmotoren ausgebildeten Motoren (M) , die die Geschwindigkeit des linken und rechten Fortbewegungsmittels 48, 50 verstellen, und zwar zwischen einer Höchstgeschwindigkeit, wenn der Steuerhebel 4 nach vorne in seine Höchstgeschwindigkeitsstellung gedrückt wird, und einer nahezu Neutralstellung, wenn der Steuerhebel 4 in seine Halt-Stellung gezogen wird, wie sie in Figur 5 gezeigt ist. Gemäß Figur 8 hebt ein Bremsarm 42, der an das linke Steuerrohr 10 angeschweißt ist, eine Bremsbetätigungsvorrichtung 44 an, der an den Träger 68 schwenkbar angebracht ist, so daß die Bremsbetätigungsvorrichtung 44 um eine im wesentlichen horizontale Achse schwenkt, wenn der Steuerhebel 4 in seine Halt-Stellung bewegt wird. Die Bremsbetätigungsvorrichtung zieht ein Seil 46, um einen Bremseinrückzusammenbau 47 zu betätigen. In dem gezeigten bevorzugten Ausführungsbeispiel sind die von dem Bremseinrückzusammenbau 47 ausgelösten Bremsen ein Paar nasser Bremsen 73 bekannter Konstruktion innerhalb des hydrostatischen Getriebes, wie es in Figur 9 schematisch dargestellt ist, die dazu benutzt werden, die Drehung des linken und des rechten Fortbewegungsmittels 48, 50 zu beenden. Obwohl die in dem bevorzugten Ausführungsbeispiel der vorliegenden Erfindung benutzten Bremsen 73, innere nasse Bremsen sind, wird die Benutzung anderer Arten in dem Stand der Technik bekannter Bremsen (z. B. außenliegende Bremse, Backenbremse, Scheibenbremse, Klotzbremse, Bandbremse und Konusbremse) von der Erfindung umfaßt.

Während des normalen Mähbetriebs wird Kraft von dem Motor 52 mittels eines Paars hydrostatischer Getriebe, das unter der Antriebstragfläche 53 montiert ist, dem linken und dem rechten angetriebenen Fortbewegungsmittel 48 und 50 zugeführt. Wie es in Figur 9 in schematischer Art dargestellt ist, enthält jedes hydrostatische Getriebe ein System hydraulischer Komponenten, die eine Pumpe (P) und einen Motor (M) enthalten. Der Motor 52 treibt das Paar von Pumpen (P) an, von denen jede mit einem Motor (M) verbunden ist, um das dazugehörige Fortbewegungsmittel 48, 50 anzutreiben. Die Pumpe (P) und der Motor (M) sind als Hydraulikpumpe und als Hydraulikmotor ausgebildet. Die Bremsen 73 sind an jedes linke und rechte Fortbewegungsmittel 48, 50 angeschlossen. Der Motor 52 treibt auch eine nicht gezeigte Kraftübertragungswelle an, an die ein oder mehrere Messer zum Mähen von Gut angeschlossen sind.

Auf den Handgriffen 58 sind linke und rechte der Lenkung dienende Hebel 54, 56 vorgesehen. Der linke und rechte Hebel 54, 56 werden aufgrund von Federn 39, die die Schwenkplatten beaufschlagen, in ihre in Figur 1 gezeigte untere Stellung gedrängt, wobei die Federn 39 einenends an die linke oder rechte Schwenkplatteneinstellvorrichtung 38, 40 und anderenends an Federhalter 41 angeschlossen sind, die an die Antriebstragfläche 53 montiert sind, wie dies in den Figuren 6 und 7 gezeigt ist. Der linke und der rechte Hebel 54, 56 wirken auf eine Verbindung herstellende Gestänge 37, die die entsprechenden linken und rechten Gestänge 34, 36 entlang eines Pfades bewegen, der von den linken und rechten Führungen 20, 22 vorgegeben wird, um die Pumpen (P) in einer unbegrenzten Anzahl von Schritten in einem Bereich zwischen der maximalen Vorwärtsfahrtgeschwindigkeit, wie sie von dem Steuerhebel 4 eingestellt wird, durch Neutral in Rückwärts zu steuern. Wenn sich der linke und der rechte Hebel 54, 56 in seiner unteren vorgespannten Stellung befindet, werden das linke und das rechte Fortbewegungsmittel 48, 50 im wesentlichen im Uhrzeigerdrehsinn angetrieben, wenn man auf Figur 1 schaut, und zwar in einem Maß, das der maximalen Vorwärtsfahrtgeschwindigkeit entspricht, die von dem Steuerhebel 4 eingestellt ist.

Wenn der linke und der rechte Hebel 54, 56 von einer Bedienungsperson nach oben zur Neutralstellung - sh. Figur 5 - gedrängt wird, werden das linke und das rechte Fortbewegungsmittel 48, 50 verlangsamt. Eine manuell einlegbare Neutrallasche 57 ist als Steuerung vorhanden, um es der Bedienungsperson zu ermöglichen, das Paar Pumpen (P) nahe der Neutralstellung zu arretieren, und zwar selbst dann, wenn sich der Steuerhebel 4 in einer anderen als seiner Halt-Stellung befindet. Eine nach oben gerichtete Bewegung des linken und rechten Hebels 54, 56 über die Neutralstellung hinaus schaltet die entsprechende Pumpen (P) aus dem Paar in Rückwärts, was bewirkt, daß ein entsprechendes linkes oder rechtes Fortbewegungsmittel 48, 50 entgegen der Vorwärtsdrehrichtung dreht.

Eine einzelne Bewegung des linken oder des rechten Hebels 54, 56 mit Bezug auf den jeweils anderen steht für eine Linksoder Rechtsdrehung des Fahrzeugs. Im Gegensatz dazu bewirkt eine Bewegung des Steuerhebels 4 oder beider Hebel 54, 56 im gleichen Maß eine gleiche Bewegung der beiden linken und rechten Gestänge 34, 36 zusammen und steht für eine Beschleunigung oder Verzögerung geradeaus. Jedoch ist der Steuerhebel 4 derart ausgebildet, daß die Bedienungsperson nicht in der Lage ist, durch den Gebrauch des Steuerhebels 4 das Paar Pumpen (P) in Rückwärts zu schalten; vielmehr ist die Handhabung des linken und rechten Hebels 54, 56 erforderlich, um den Rasenmäher rückwärts zu bewegen. In dem bevorzugten Ausführungsbeispiel wird die Bewegung des Steuerhebels 4 in seiner Halt-Stellung mittels der Oberseite der Neutrallasche 57 in dem Instrumentenbrett 69 begrenzt. Obwohl es geschehen könnte, daß der Steuerhebel 4 zu weit bewegt wird, wird die Höchstgeschwindigkeitsstellung des Steuerhebels 4 erreicht, wenn eine Schwenkplatte in einem der Getriebe, an die der Steuerhebel 4 angeschlossen ist, seinen maximalen Winkel erreicht. Die Höchstgeschwindigkeitsstellung des Steuerhebels 4 kann, falls dies gewünscht ist, durch einen Anschlag geregelt werden.

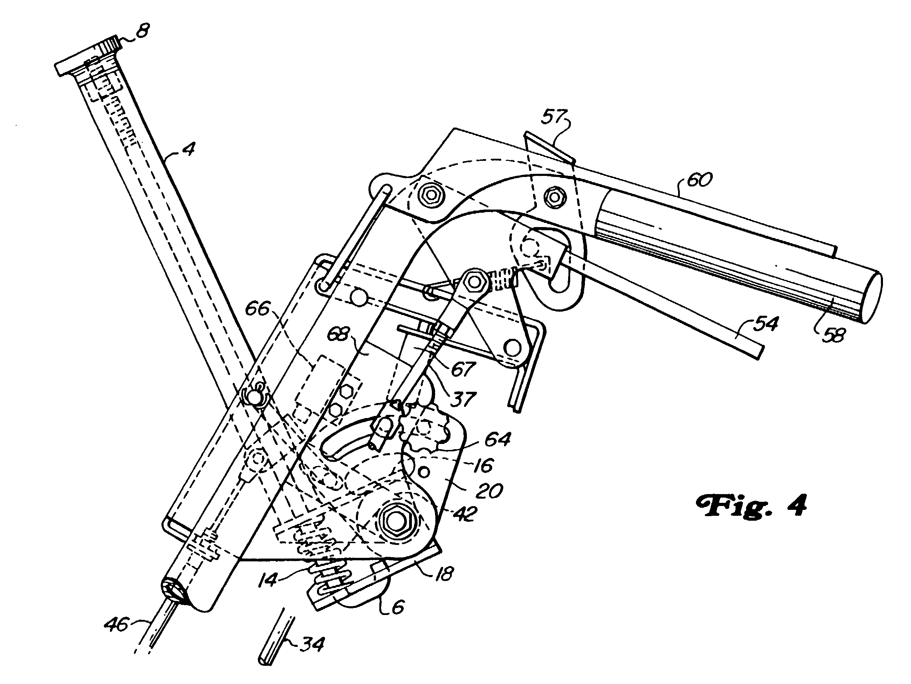

Andere Merkmale, die in dem bevorzugten Ausführungsbeispiel enthalten sind, schließen linke und rechte Schalthebel 60, 62 ein, die auf die Anwesenheit einer Bedienungsperson ansprechen und die auf den Handgriffen 58 gegenüber den linken und rechten Hebeln 54, 56 angeordnet sind, so daß sie während des Betriebs des Rasenmähers von der Bedienungsperson bequem erreicht werden können. Zusätzlich ist ein Sperrkreis vorgesehen, der sich aus einem in den Figuren 7 und 8 gezeigten Bremssperrschalter 66 und einem in den Figuren 4 und 5 gezeigten Schalter 67 zusammensetzt, dessen Funktion von der Anwesenheit einer Bedienungsperson abhängt, wobei der Bremssperrschalter 66 infolge der Stellung des Steuerhebels 4 in seiner Halt-Stellung und der Bremssperrschalter 67 infolge des Einrückens des linken oder rechten Schalthebels 60, 62 betätigt wird. Der Bremskreis ermöglicht es der Bedienungsperson, den Rasenmäher anzuhalten, indem er den Steuerhebel 4 in seine Halt-Stellung bringt und somit die Getriebe in Neutral schaltet und die Bremsen 73 anlegt, und nach dem Ausrücken des oder der Messer den linken und rechten Schalthebel 60, 62 zu lösen und sich von dem Rasenmäher zu entfernen, während der Motor 52 weiter läuft. Der Bremskreis ermöglicht es somit einer Bedienungsperson, z. B. den Rasenmäher anzuhalten und um ihn herumzulaufen, um ein Hindernis aus dem Weg des Rasenmähers zu räumen, während sichergestellt wird, daß der Motor 52 nicht laufen wird, wenn das oder die Messer eingerückt sind und weder der linke noch der rechte Schalthebel 60, 62 aktiviert ist.

In dem bevorzugten Ausführungsbeispiel ist auch ein einstellbarer Anschlag 64 enthalten, der mittels demontierbarer Befestigungsmittel 65 an der linken oder rechten Führung 20, 22 festgelegt ist, um die Bewegung der einen oder anderen Führung 20, 22 durch Anschlagen an dem Träger 68 zu begrenzen und dadurch auch die Bewegung der linken und rechten Gestänge 34, 36 aufgrund der Betätigung des Steuerhebels 4. Außerdem wird dadurch eine weitere Bewegung der linken oder rechten Führung 20 oder 22 verhindert, wenn die linke oder rechte Führung 20 oder 22, an die der Steuerhebel 4 angeschlossen ist, die gewünschte Einstellung erreicht hat. Der einstellbare Anschlag 64 kann in eine Vielzahl von Stellungen gebracht werden, was es der Bedienungsperson erlaubt, eine bevorzugte Betriebsgeschwindigkeit voreinzustellen, zu der nach dem Anhalten leicht wieder zurückgekehrt werden kann, oder den Steuerhebel 4 in seiner Halt-Stellung festzulegen, um Vorkehrungen gegen ein ungewolltes Lösen der Bremsen 73 zu treffen. Die Einstellung des Anschlags 64, um den Steuerhebel 4 in seiner Halt-Stellung zu arretieren, ist insbesondere brauchbar, um ein Ausrücken der Bremsen 73 während des Transports zu vermeiden, wenn der Rasenmäher beim Transport auf einem Anhänger oder einem anderen Beförderungsmittel erschüttert wird.

## Patentansprüche

1. Fahrzeug in selbstangetriebener Bauweise, insbesondere Rasenmäher, mit einem Motor (52), wenigstens einem Getriebe, einem Steuerhebel (4) und Bremsen (73), wobei das Getriebe wenigstens eines von zwei Fortbewegungsmitteln (48, 50) antreibt und in eine Neutralstellung bringbar ist, der Steuerhebel (4) eine Stellung für Vorwärtsfahrt und eine Halt-Stellung einnehmen kann und die Bremsen (73) auf die Fortbewegungsmittel (48, 50) wirken, **gekennzeichnet durch** eine Bremsbetätigungsvorrichtung (44), die von dem Steuerhebel (4) beaufschlagbar ist und auf die Bremsen (73) wirkt, und dann zum Anlegen der Bremsen (73) betätigt wird, wenn der Steuerhebel (4) seine Neutralstellung einnimmt, und wobei der Steuerhebel (4) Stellungen unterschiedlicher Fahrtgeschwindigkeit einnehmen kann.

2. Fahrzeug nach Anspruch 1, **gekennzeichnet durch** einen veränderlichen Anschlag (64) zum Bestimmen der über den Steuerhebel (4) einstellbaren maximalen Geschwindigkeit.

3. Fahrzeug nach Anspruch 1 oder 2, **gekennzeichnet durch** wenigstens einen Schalthebel (60, 62) und vorzugsweise einen Schalter (67), die in Abhängigkeit von der Betätigung **durch** eine Bedienungsperson auf den Motor (52) wirken.

4. Fahrzeug nach einem oder mehreren der vorherigen Ansprüche, **dadurch gekennzeichnet, daß** die Fortbewegungsmittel (48, 50) als Räder ausgebildet sind.

5. Fahrzeug nach einem oder mehreren der vorherigen Ansprüche, **dadurch gekennzeichnet, daß** jedes Fortbewegungsmittel (48, 50) von einer hydraulischen Pumpe (P) und einem hydraulisch betriebenen Motor (M), insbesondere mit variablem Verdrängungsvolumen, angetrieben werden.

6. Fahrzeug nach einem oder mehreren der vorherigen Ansprüche, **dadurch gekennzeichnet, daß** beide Motoren (M) mittels des Steuerhebels (4) bedienbar sind.

7. Fahrzeug nach einem oder mehreren der vorherigen Ansprüche, **dadurch gekennzeichnet, daß** Geschwindigkeitssteuerungen (34, 37, 38, 39, 54; 36 - 39, 56) für jeden Motor (M) vorgesehen sind, die unabhängig von dem Steuerhebel (4) den jeweiligen Motor (M) von einem Höchstgeschwindigkeitszustand für Vorwärtsfahrt über eine Neutralstellung in Rückwärtsfahrt verstellen können.

8. Fahrzeug nach einem oder mehreren der vorherigen Ansprüche, **gekennzeichnet durch** ein Seil (46), das einenends direkt von dem Steuerhebel (4) betätigt wird und anderenends auf einen Bremseinrückzusammenbau (47) wirkt, der die Bremsen (73) betätigt.

9. Fahrzeug nach einem oder mehreren der vorherigen Ansprüche, **dadurch gekennzeichnet, daß** die Bremsen (73) als nasse Bremsen ausgebildet sind.

10. Fahrzeug nach einem oder mehreren der vorherigen Ansprüche, **dadurch gekennzeichnet, daß** zwischen dem Steuerhebel (4) und einem diesen schwenkbar tragenden Träger (68) Reibmittel (26) vorgesehen sind.

## Claims

1. A self-propelled vehicle, especially a lawnmower, with an engine (52), at least one transmission, a control lever (4) and brakes (73), wherein the transmission drives at least one of two propulsion means (48, 50) and can be placed in a neutral position, the control lever (4) can assume a position for forward travel and a stop position and the brakes (73) act on the propulsion means (48, 50), **characterized by** a brake actuating device (44) which can be actuated by the control lever (4) and acts on the brakes (73) and is actuated to apply the brakes (73) when the control lever (4) assumes its neutral position, and wherein the control lever (4) can assume positions with different vehicle speeds of travel.

2. A vehicle according to claim 1, **characterized by** a variable stop (64) for determining the maximum speed which can be set by the control lever (4).

3. A vehicle according to claim 1 or 2, **characterized by** at least one switch lever (60, 62) and preferably a switch (67) which act on the engine (52) in dependence on actuation by an operator.

4. A vehicle according to one or more of the preceding claims, **characterized in that** the propulsion means (48, 50) are in the form of wheels.

5. A vehicle according to one or more of the preceding claims, **characterized in that** each propulsion means (48, 50) is driven by a hydraulic pump (P) and a hydraulically driven motor (M), especially with variable displacements.

6. A vehicle according to one or more of the preceding claims, **characterized in that** both motors (M) can be operated by means of the control lever (4).

7. A vehicle according to one or more of the preceding claims, **characterized in that** speed controls (34, 37, 38, 39, 54; 36 - 39, 56) are provided for each motor (M) and can be adjusted, independently of the control lever (4), for the respective motor (M) from a highest speed state for forward travel through a neutral position to reverse travel.

8. A vehicle according to one or more of the preceding claims, **characterized by** a cable (46) which is actuated at one end directly by the control lever (4) and acts at the other end on a brake engagement assembly (47), which actuates the brakes (73).

9. A vehicle according to one or more of the preceding claims, **characterized in that** the brakes (73) are in the form of wet brakes.

10. A vehicle according to one or more of the preceding claims, **characterized in that** friction means (26) are provided between the control lever (4) and a support (68) carrying it pivotally.

## Revendications

1. Véhicule de type automoteur, en particulier une tondeuse, avec un moteur (52), au moins une boîte de vitesses, un levier de commande (4) et des freins (73), la boîte de vitesses entraînant au moins l'un de deux moyens de locomotion (48, 50) et pouvant être amenée dans une position neutre, le levier de commande (4) pouvant occuper une position de marche avant et une position d'arrêt et les freins (73) agissant sur les moyens de locomotion (48, 50), **caractérisé par** un dispositif d'actionnement de frein (44) qui peut être mis sous charge par le levier de commande (4) et agit sur les freins (73) et est ensuite actionné pour appliquer les freins (73) quand le levier de commande (4) occupe sa position neutre, et le levier de commande (4) pouvant occuper des positions de différentes vitesses de déplacement.

2. Véhicule selon la revendication 1, **caractérisé par** une butée réglable (64) pour déterminer la vitesse maximale réglable par l'intermédiaire du levier de commande (4).

3. Véhicule selon la revendication 1 ou 2, **caractérisé par** au moins un levier de vitesse (60, 62) et de préférence un commutateur (67) qui agissent sur le moteur (52) en fonction de l'actionnement par un opérateur.

4. Véhicule selon l'une quelconque ou plusieurs des revendications précédentes, **caractérisé en ce que** les moyens de locomotion (48, 50) sont réalisés comme des roues.

5. Véhicule selon l'une quelconque ou plusieurs des revendications précédentes, **caractérisé en ce que** chaque moyen de locomotion (48, 50) est entraîné par une pompe hydraulique (P) et un moteur (M) entraîné de façon hydraulique, en particulier avec un volume de déplacement variable.

6. Véhicule selon l'une quelconque ou plusieurs des revendications précédentes, **caractérisé en ce que** les deux moteurs (M) peuvent être commandés au moyen du levier de commande (4).

7. Véhicule selon l'une quelconque ou plusieurs des revendications précédentes, **caractérisé en ce que** pour chaque moteur (M) des commandes de vitesse (34, 37, 38, 39, 54 ; 36 à 39, 56) sont prévues qui peuvent, indépendamment du levier de commande (4), faire passer le moteur respectif (M) d'un état de vitesse maximale pour la marche avant à la marche arrière, en passant par une position neutre.

8. Véhicule selon l'une quelconque ou plusieurs des revendications précédentes, **caractérisé par** un câble (46) qui est actionné à une extrémité directement par le levier de commande (4) et agit à l'autre extrémité sur un ensemble d'engagement de frein (47) qui actionne les freins (73).

9. Véhicule selon l'une quelconque ou plusieurs des revendications précédentes, **caractérisé en ce que** les freins (73) sont réalisés comme des freins humides.

10. Véhicule selon l'une quelconque ou plusieurs des revendications précédentes, **caractérisé en ce que** des moyens de friction (26) sont prévus entre le levier de commande (4) et un support (68) portant celui-ci de façon pivotante.
